# EUROPÄISCHE PATENTSCHRIFT

(11) **EP 4 158 204 B1**
(45) Veröffentlichungstag und Bekanntmachung des Hinweises auf die Patenterteilung: **04.11.2026**
(21) Anmeldenummer: 21725729.4
(22) Anmeldetag: 10.05.2021
(51) Int. Cl.: F04D 29/42, F04D 29/68

(54) **VERDICHTERGEHÄUSE MIT STABILISATORKANAL**
COMPRESSOR CASING WITH STABILIZER CHANNEL
COMPRESSEUR AVEC CANAL DE STABILISATEUR

(30) Priorität: 25.05.2020 EP 20176379
(43) Veröffentlichungstag der Anmeldung: 05.04.2023
(73) Patentinhaber: Accelleron Switzerland Ltd., 5400 Baden (CH)
(72) Erfinder: RUSCH, Daniel Bernhard, 5430 Wettingen (CH); MUNDINGER, Gerd, 5430 Wettingen (CH)
(74) Vertreter: Zimmermann & Partner Patentanwälte mbB
(86) Internationale Anmeldenummer: PCT/EP2021/062336
(87) Internationale Veröffentlichungsnummer: WO 2021/239455

(56) Entgegenhaltungen:
- EP-A1- 2 434 165
- DE-A1- 10 105 456
- DE-A1- 102019 216 414
- GB-A- 2 220 447

## Beschreibung

### TECHNISCHES GEBIET

Die Erfindung bezieht sich auf das Gebiet der Verdichter, insbesondere der Radialverdichter und Diagonalverdichter. Insbesondere betrifft die Erfindung ein Verdichtergehäuse mit einem Stabilisatorkanal am Verdichtereintritt zur Verbesserung der Kennfeldbreite und der Kennliniensteigung einer Verdichterstufe.

### TECHNISCHER HINTERGRUND

Abgasturbolader werden zur Leistungssteigerung von Brennkraftmaschinen, insbesondere Hubkolbenmotoren, eingesetzt. Dabei besitzt ein Abgasturbolader üblicherweise einen Radial- oder Diagonalverdichter und eine Radial- oder Axialturbine.

Der fahrbare Betriebsbereich von Radial- und Diagonalverdichtern ist hin zu kleineren Massenströmen durch die Pumpgrenze / Strömungsinstabilität limitiert: Beim Androsseln des Verdichters verschlechtern sich die Inzidenz-Winkel zunehmend, bis die Strömung ablöst und es zum Pumpen kommt. Der zulässige Inzidenz-Winkelbereich, bei welchem die Strömung noch anliegt, nimmt dabei mit steigender Strömungsmachzahl ab. Das heißt die Kennfeldbreite nimmt bei Stufen mit hohem Druckverhältnis und/oder hohem Schluckvermögen tendenziell ab.

Als Kennlinien-Stabilisierungs-Maßnahme kann dabei über der Radkontur des Verdichterrades, parallel zum Ansaugkanal, ein Bypass in Form eines Ringhohlraumes innerhalb des Verdichtergehäuses vorgesehen werden. Ein derartiger Bypass ist auch als Stabilisatorraum oder Rezirkulator bekannt. Durch die Verwendung eines Rezirkulators kann der Massenstrom am Verdichterradeintritt in Pumpgrenznähe künstlich erhöht werden. Aus dem Verdichterrad wird ein Teil des Massenstroms in den Seitenraum (Bypass) abgezweigt. Dieser Massenstrom weist eine starke Drallkomponente auf (in Drehrichtung des Impellers - Mitdrall). Dieser Mitdrall führt dazu, dass der Arbeitsumsatz im Verdichter reduziert wird, was zu flach verlaufenden Kennlinien in Pumpgrenznähe führt.

Flach verlaufende Kennlinien in Pumpgrenznähe können bei Anwendungen mit Druckpulsationen (z.B. bedingt durch die Ventilbewegung des aufgeladenen Verbrennungsmotors) zu unerwartetem Pumpen führen. Aus diesem Grund besteht die Anforderung einer Mindestdruckerhöhung zwischen Betriebspunkt und dem Pumpgrenzpunkt auf der Betriebsdrehzahllinie bereitzustellen. Diese Forderung kann bei Stufen mit hohem Druckverhältnis und konventionellem Bypass / Stabilisatorkanal kaum noch erfüllt werden - aufgrund des hohen Arbeitsumsatzes und des flachen Arbeitsziffer-Verlaufs über dem Massenstrom bei konstanter Drehzahl.

Zum Stand der Technik wird beispielhaft auf die Dokumente GB 2 220 447 A und DE 101 05 456 A1 verwiesen. Dokument GB 2 220 447 A betrifft Gaseinlassöffnungen für die Pump- und Drosselregelung in einem Kompressor. In der GB 2 220 447 A wird beschrieben. Dokument DE 101 05 456 A1 betrifft einen Verdichter, insbesondere für eine Brennkraftmaschine, mit einem Verdichterrad in einem Verdichter. Strömungskanal, und mit einer Rezirkulationseinrichtung, die einen Bypass zum Verdichter-Strömungskanal umfasst. Der Rezirkulationseinrichtung ist ein Rezirkulationsring zugeordnet ist, der im Bypass angeordnet ist und das Verdichterrad radial umgreift und eine Mehrzahl über den Umfang gleichmäßig verteilter Strömungskanäle aufweist.

### KURZE DARSTELLUNG DER ERFINDUNG

Die Aufgabe der vorliegenden Erfindung besteht darin, ein Verdichtergehäuse eines Verdichters, insbesondere eines Radialverdichters oder Diagonalverdichters, bereitzustellen, dessen Stabilisatorkanal mindestens hinsichtlich einer der aus dem Stand der Technik bekannten Nachteile verbessert ist. Des Weiteren besteht die Aufgabe der vorliegenden Erfindung darin, einen verbesserten Verdichter und eine verbesserte Strömungsmaschine, insbesondere einen verbesserten Turbolader, bereitzustellen.

Zur Lösung der obengenannten Aufgaben wird ein Verdichtergehäuse eines Verdichters, insbesondere eines Radialverdichters oder Diagonalverdichters, gemäß dem unabhängigen Anspruch 1 bereitgestellt. Ferner werden ein Verdichter mit einem Stabilisatorkanal gemäß den hierein beschriebenen Ausführungsformen sowie eine Strömungsmaschine, insbesondere ein Turbolader, mit einem derartigen Verdichter bereitgestellt.

Weitere Aspekte, Vorteile und Merkmale der vorliegenden Erfindung sind den abhängigen Patentansprüchen, der Beschreibung und den beiliegenden Figuren zu entnehmen.

Gemäß einem Aspekt der Erfindung wird ein Verdichtergehäuse eines Verdichters, insbesondere eines Radialverdichters oder Diagonalverdichters, bereitgestellt. Das Verdichtergehäuse umfasst einen Stabilisatorkanal. Der Stabilisatorkanal umfasst einen ringförmigen Stabilisatorraum, welcher einen Hauptströmungskanal im Ansaugbereich eines Verdichterrades umgibt. Der ringförmige Stabilisatorraum ist durch einen Ringsteg gegenüber dem Hauptströmungskanal abgegrenzt. Der ringförmige Stabilisatorraum steht über einen stromabliegenden Strömungseintritt und einen stromaufliegende Strömungsaustritt mit dem Hauptströmungskanal in Verbindung. In dem Strömungseintritt ist mindestens ein Trennelement angeordnet, so dass eine Einströmung in den ringförmigen Stabilisatorraum quer zur Hauptströmungsrichtung des Hauptströmungskanals gesplittet wird. Ferner ist in dem Strömungseintritt mindestens ein Strömungsleitelement angeordnet. Das mindestens eine Trennelement ist in dem Strömungseintritt derart angeordnet, dass zwei oder mehrere stromabliegende Eintrittskanäle bereitgestellt werden. Die zwei oder mehreren stromabliegenden Eintrittskanäle sind zwischen einem stromaufliegenden Teil des Ringstegs (und einem stromabliegenden Teil des Ringstegs angeordnet. Der stromaufliegende Teil des Ringstegs umfasst einen sich im Wesentlichen in radialer Richtung erstreckenden ersten Fortsatz. Alternativ oder zusätzlich umfasst der stromabliegende Teil des Ringstegs einen sich im Wesentlichen in radialer Richtung erstreckenden zweiten Fortsatz. Alternativ oder zusätzlich umfasst der stromabliegende Teil des Ringstegs einen sich im Wesentlichen in axialer Richtung erstreckenden zweiten Fortsatz.

Somit wird vorteilhafterweise ein Stabilisatorkanal bereitgestellt, der eine Verbesserung der Kennfeldbreite und der Kennliniensteigung einer Verdichterstufe ermöglicht. Insbesondere, hat eine Strömungssplittung im Strömungseintritt in Kombination mit einer Strömungsführung, beispielsweise mittels hierein beschriebener Strömungsleitelemente, den Vorteil, dass Spitzenspaltwirbel im Impeller (z.B. Verdichterrad) durch gleichmäßigere Absaugung besser beeinflussbar sind als beim Stand der Technik. Durch eine geeignete Anordnung des Trennelements im Strömungseintritt kann die Eindringtiefe des Spitzenspaltwirbels, insbesondere bei zusätzlicher Verwendung eines Strömungsleitelements, reduziert und dessen Orientierung günstig beeinflusst werden. Im Vergleich zu einer konventionellen Konfiguration ohne Splittung der Einströmung in den Stabilisatorraum und/oder Splittung der Ausströmung aus dem Stabilisatorraum kann mit den hierein beschriebenen Ausführungsformen eine verbesserte Stabilität und/oder ein höherer Wirkungsgrad erzielt werden.

Gemäß einem zweiten Aspekt der Erfindung wird ein Verdichter, insbesondere ein Radialverdichter oder ein Diagonalverdichter, bereitgestellt der ein Verdichterrad und ein Verdichtergehäuse gemäß einer der hierein beschriebenen Ausführungsformen umfasst. Insbesondere umfasst das Verdichterrad im Bereich des Strömungseintritts in den Stabilisatorkanal eine Anzahl N₁ an Verdichterradschaufeln und eine Anzahl N₂ an Leitelemente des mindestens einen Strömungsleitelements, wobei die Anzahl N₂ ≥ 1.5×N₁ ist.

Somit kann vorteilhafterweise ein Verdichter mit verbesserter Kennfeldbreite und Kennliniensteigung, insbesondere mit reduzierter Geräusch- und Schwingungsentwicklung im Betrieb des Verdichters, bereitgestellt werden.

Ein dritter Aspekt der Erfindung betrifft eine Strömungsmaschine, insbesondere einen Turbolader, mit einem Verdichter gemäß einer der hierein beschriebenen Ausführungsformen, so dass vorteilhafterweise ein Turbolader bereitgestellt wird, der gegenüber dem Stand der Technik verbessert ist.

### KURZBESCHREIBUNG DER FIGUREN

Im Weiteren soll die Erfindung anhand von in Figuren dargestellten Ausführungsbeispielen erläutert werden, aus denen sich weitere Vorteile und Abwandlungen ergeben. Hierbei zeigen:
- Figur 1: eine schematische Ansicht eines Stabilisatorkanals gemäß dem Stand der Technik;
- Figur 2: eine schematische Ansicht eines Stabilisatorkanals gemäß hierin beschriebenen Ausführungsformen;
- Figur 3a: eine schematische Ansicht eines Stabilisatorkanals gemäß weiteren hierin beschriebenen Ausführungsformen, wobei der Stabilisatorkanal in ein Einsatzteil integriert ist;
- Figur 3b: eine schematische Ansicht eines Stabilisatorkanals gemäß weiteren hierin beschriebenen Ausführungsformen, wobei der Stabilisatorkanal Bestandteil eines inneren Verdichtergehäuses ist;
- Figuren 4 bis 8: schematische Ansichten eines Stabilisatorkanals gemäß weiteren hierin beschriebenen Ausführungsformen, wobei die

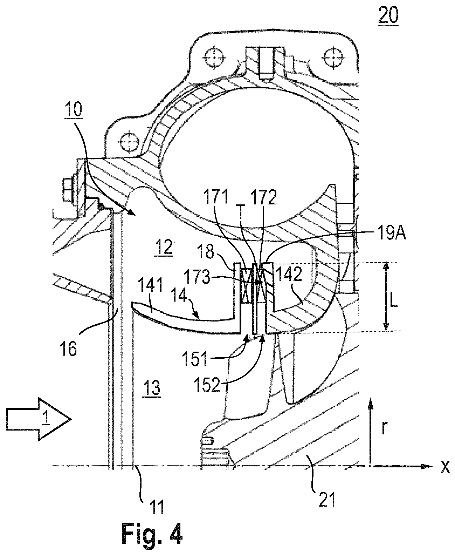

- Figuren 4 bis 7: erfindungsgemäße Ausführungsformen zeigen;

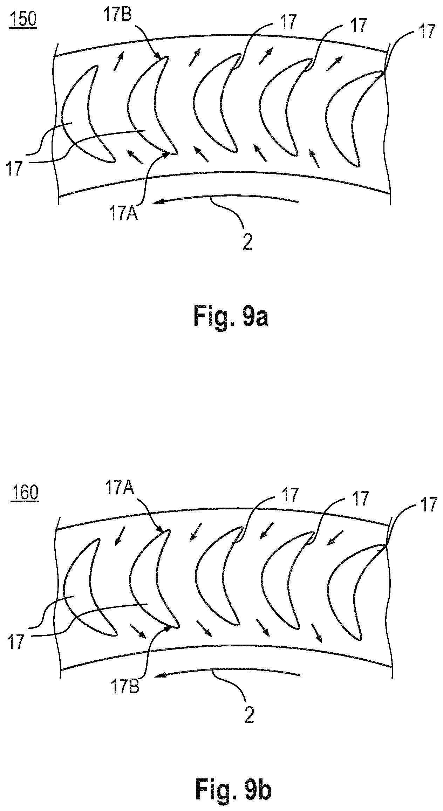

- Figur 9a: eine schematisch Ansicht einer Konfiguration von Strömungsleitelementen in einem stromabliegenden Eintrittskanal zum Erzeugen eines Strömungsgegendralls beim Durchströmen der Leitelemente;
- Figur 9b: eine schematisch Ansicht einer Konfiguration von Strömungsleitelementen in einem stromaufliegenden Austrittskanal zum Erzeugen eines Strömungsgegendralls beim Durchströmen der Leitelemente;

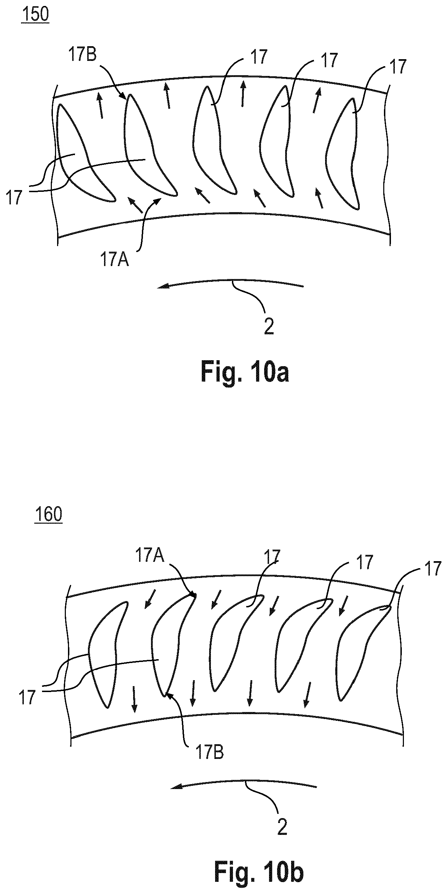

- Figur 10a: eine schematisch Ansicht einer Konfiguration von Strömungsleitelementen in einem stromabliegenden Eintrittskanal zum Abbau eines Strömungsdralls beim Durchströmen der Leitelemente; und
- Figur 10b: eine schematisch Ansicht einer Konfiguration von Strömungsleitelementen in einem stromaufliegenden Austrittskanal zum Abbau eines Strömungsdralls beim Durchströmen der Leitelemente.

### DETAILLIERTE BESCHREIBUNG DER FIGUREN

Im Folgenden wird nun ausführlich auf die verschiedenen Ausführungsformen eingegangen, von denen in jeder Abbildung ein oder mehrere Beispiele dargestellt sind. Jedes Beispiel dient der Erläuterung und ist nicht als Einschränkung zu verstehen. Beispielsweise können Merkmale, die als Teil einer Ausführungsform dargestellt oder beschrieben sind, auf oder in Verbindung mit jeder anderen Ausführungsform verwendet werden, um eine weitere Ausführungsform zu erhalten. Es ist beabsichtigt, dass die vorliegende Offenlegung solche Modifikationen und Variationen einschließt.

In der folgenden Beschreibung der Zeichnungen beziehen sich die gleichen Referenznummern auf die gleichen oder ähnlichen Komponenten. Im Allgemeinen werden nur die Unterschiede in Bezug auf die einzelnen Ausführungsformen beschrieben. Sofern nicht anders angegeben, kann sich die Beschreibung eines Teils oder Aspekts in einer Ausführungsform auch auf ein entsprechendes Teil oder einen entsprechenden Aspekt in einer anderen Ausführungsform beziehen. Der Schutzumfang der Erfindung wird durch die beigefügten Ansprüche bestimmt.

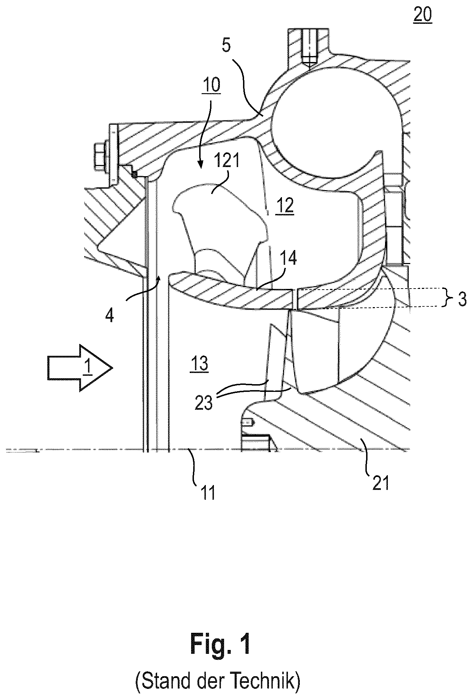

Figur 1 zeigt eine schematische Ansicht eines Stabilisatorkanals 10 gemäß dem Stand der Technik. Insbesondere zeigt Figur 1 einen entlang der Rotationsachse 11 des Verdichterrades 21 geführten Schnitt durch ein Gehäuse eines Radialverdichters, wie er etwa zum Verdichten von Luft in Abgasturboladern eingesetzt wird. In dem Verdichtergehäuse 5 ist ein Stabilisatorraum 12 angeordnet. Der Stabilisatorraum 12 ist über einen Eintrittskanal 3 und eine Austrittsöffnung 4 mit dem Hauptströmungskanal 13 verbunden. Der Stabilisatorraum 12 ist gegenüber dem Hauptströmungskanal 13 mittels eines Ringstegs 14 abgegrenzt. In dem Stabilisatorraum 12 sind Halterippen 121 angeordnet, die den Ringsteg 14 mit dem Verdichtergehäuse verbinden.

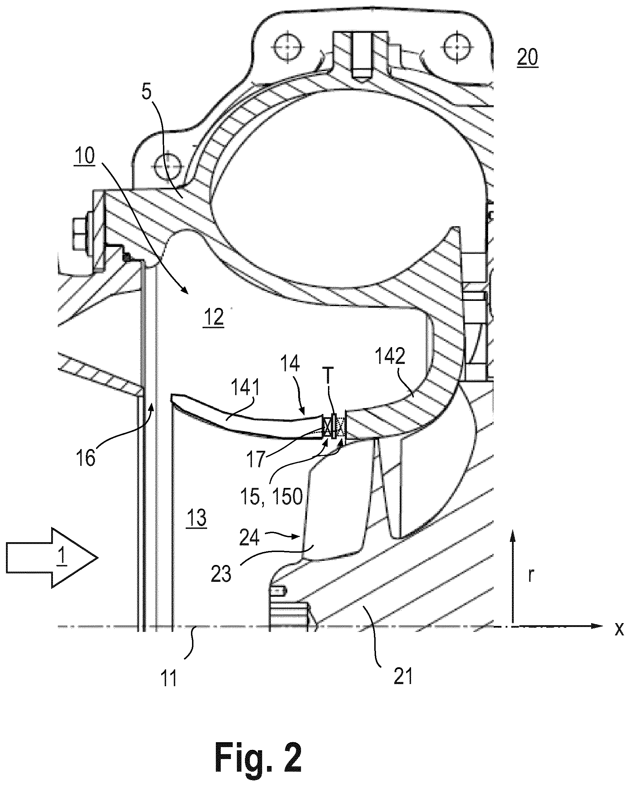

Mit Bezugnahme auf die Figuren 2 bis 10 werden Ausführungsformen eines Stabilisatorkanals eines Verdichters gemäß der vorliegenden Offenbarung beschrieben. Der Verdichter kann ein Radialverdichter oder eine Diagonalverdichter sein.

Erfindungsgemäß umfasst der Stabilisatorkanal 10 einen ringförmigen Stabilisatorraum 12, welcher einen Hauptströmungskanal 13 im Ansaugbereich eines Verdichterrades 21 umgibt, wie es beispielhaft in Figur 2 dargestellt ist. Mit anderen Worten, typischerweise ist der Stabilisatorkanal 10 am Verdichtereintritt angeordnet. In diesem Zusammenhang sei angemerkt, dass in der vorliegenden Offenbarung unter einem "Stabilisatorkanal" insbesondere ein Kanal im Verdichtereintritt zu verstehen ist, der konfiguriert ist um eine Kennfeldbreite einer Verdichterstufe zu verbessern. Beispielsweise kann der Stabilisatorkanal 10 ein Rezirkulationskanal sein.

Der ringförmige Stabilisatorraum 12 ist durch einen Ringsteg 14 gegenüber dem Hauptströmungskanal 13 abgegrenzt. Der ringförmige Stabilisatorraum 12 steht über einen stromabliegenden Strömungseintritt 15 und einen stromaufliegenden Strömungsaustritt 16 mit dem Hauptströmungskanal 13 in Verbindung. Der ringförmige Stabilisatorraum 12 kann rotationssymmetrisch ausgebildet sein.

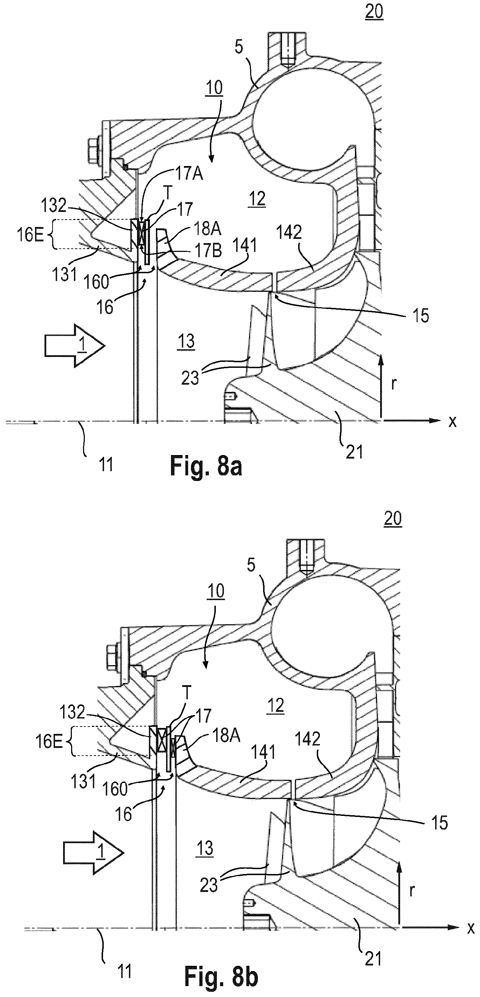

Im Strömungseintritt 15 ist mindestens ein Trennelement T angeordnet. Figur 2 zeigt eine beispielhafte Ausführungsform mit einem Trennelement T, das in dem Strömungseintritt 15 in den ringförmigen Stabilisatorraum 12 angeordnet ist. Eine beispielhafte Ausführungsform mit einem Trennelement T, das in dem Strömungsaustritt 16 aus dem ringförmigen Stabilisatorraum 12 angeordnet ist, ist in den Figuren 8a und 8b dargestellt.

Das Trennelement ist derart angeordnet, dass eine Einströmung in den ringförmigen Stabilisatorraum 12 und/oder eine Ausströmung aus dem ringförmigen Stabilisatorraum 12 quer zur Hauptströmungsrichtung 1 des Hauptströmungskanals 13 gesplittet wird. Mit anderen Worten, das Trennelement T ist konfiguriert und angeordnet so dass eine Strömung aufgeteilt wird. Das mindestens eine Trennelement T ist derart konfiguriert und in dem Strömungseintritt 15 angeordnet, dass eine Einströmung in den Stabilisatorraum 12 aufgeteilt wird. Zusätzlich kann ein weiteres Trennelement T derart konfiguriert und in dem Strömungsaustritt 16 angeordnet sein, dass eine Ausströmung aus dem Stabilisatorraum 12 aufgeteilt wird. Typischerweise ist das Trennelement in Form einer Trennwand ausgeführt, welche eine geschlossene Trennwandfläche aufweist. Alternativ kann das Trennelement, insbesondere die Trennwand, ein oder mehrere Löcher aufweisen, so dass die Trennwandfläche teilweise unterbrochen wird.

Ferner ist in dem Strömungseintritt 15 mindestens ein Strömungsleitelement 17 angeordnet, wie es beispielhaft in Figur 2 dargestellt ist. Das mindestens eine Strömungsleitelement 17 kann beispielsweise in Form einer Spirale ausgebildet sein. Typischerweise umfasst das mindestens eine Strömungsleitelement 17 mehrere Strömungsleitelemente, die umlaufend um eine zentrale Achse 11 des Hauptströmungskanals 13 angeordnet sind. Insbesondere können die mehreren Strömungsleitelemente 17 konzentrisch um die zentrale Achse 11 des Hauptströmungskanals 13 angeordnet sein.

In der vorliegenden Offenbarung beziehen sich die Begriffe "stromabliegend" und "stromaufliegend" auf die Hauptströmung im Hauptströmungskanal im Ansaugbereich eines Verdichterrades. Zum besseren Verständnis ist die Hauptströmungsrichtung 1 in den Figuren eingezeichnet. Gemäß einem Beispiel kann der Strömungseintritt 15 des Stabilisatorraums stromab zu einer Eintrittskante 24 des Verdichterrades 21 angeordnet sein, wie es in Figur 2 gezeigt ist. Der Strömungsaustritt 16 des Stabilisatorraums ist typischerweise stromauf der Eintrittskante 24 des Verdichterrades 21 angeordnet.

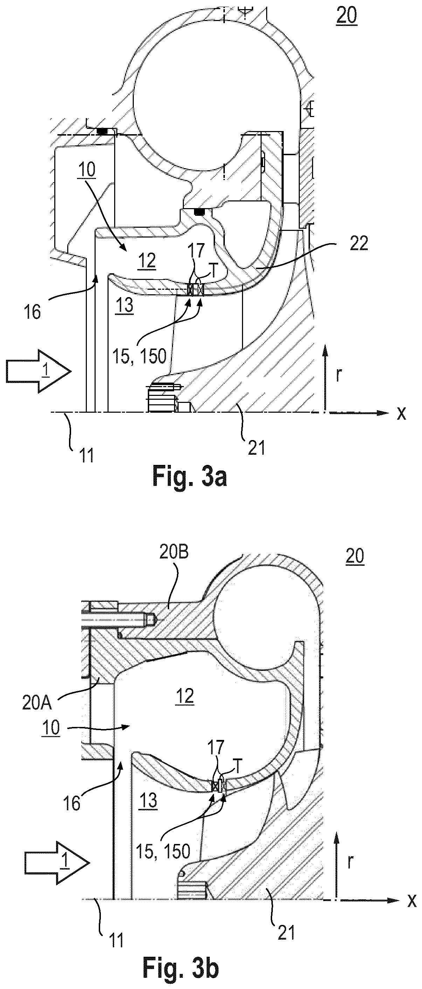

Gemäß einer Ausführungsform, die mit anderen hierin beschriebenen Ausführungsformen kombiniert werden kann, ist der Stabilisatorkanal 10 integraler Bestandteil eines Verdichtergehäuses, wie es beispielhaft in Figur 2 dargestellt ist. Alternativ kann der Stabilisatorkanal 10 in ein Einsatzteil 22 integriert sein, welches im Ansaugbereich eines Verdichters montierbar ist, wie es beispielhaft in Figur 3a dargestellt ist. Gemäß einem weiteren Beispiel kann der Stabilisatorkanal Bestandteil eines inneren Verdichtergehäuses 20A sein, wie es beispielhaft in Figur 3b dargestellt ist, in welcher ein Verdichter 20 mit einem inneren Verdichtergehäuse 20A und einem äußeren Verdichtergehäuse 20B gezeigt ist.

Das mindestens eine Trennelement T ist in dem Strömungseintritt 15 derart angeordnet, dass zwei oder mehrere stromabliegende Eintrittskanäle 150 bereitgestellt werden, wie es beispielhaft in den Figuren 2 bis 7 dargestellt ist. Wie aus den Figuren 2 bis 7 hervorgeht, sind die zwei oder mehreren stromabliegende Eintrittskanäle 150 axial voneinander beabstandet.

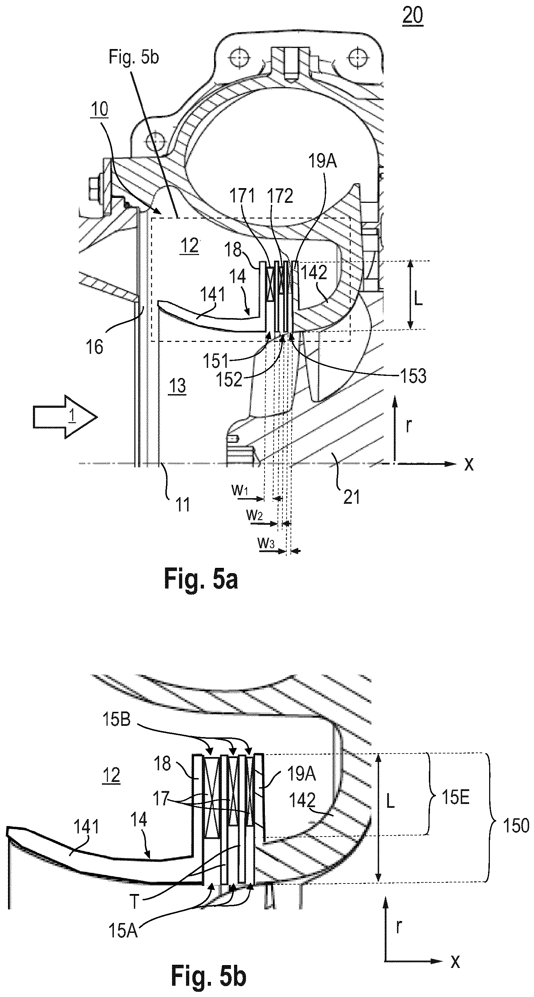

Beispielsweise, kann mindestens ein Eintrittskanal der zwei oder mehreren stromabliegenden Eintrittskanälen 150 unterschiedlich ausgebildet sein als der oder die anderen Eintrittskanäle, wie es beispielhaft in den Figuren 4, 5a, 5b und 7 dargestellt ist. Insbesondere unterscheidet sich mindestens ein Eintrittskanal der zwei oder mehreren stromabliegenden Eintrittskanälen hinsichtlich der Kanalweite und/oder der Kanalform von dem oder den anderen Eintrittskanälen. Beispielsweise, kann der mindestens eine Eintrittskanal eine geringere Eintrittskanalweite aufweisen als der oder die anderen Eintrittskanäle der zwei oder mehreren stromabliegenden Eintrittskanälen. Zur Veranschaulich zeigt Figur 5a eine beispielhafte Ausführungsform mit drei Eintrittskanälen 151, 152, 153 mit unterschiedlichen Kanalweiten w₁, w₂ und w₃. Alternativ oder zusätzlich kann der mindestens eine Eintrittskanal eine Querschnittsverjüngung in radialer Richtung aufweisen. Zur Veranschaulichung ist der zweite Eintrittskanal 152 in Figur 4 mit einer Querschnittsverjüngung 173 dargestellt. Es sei darauf hingewiesen, dass die zwei oder mehreren stromabliegenden Eintrittskanäle 150 auch gleich ausgestaltet sein können.

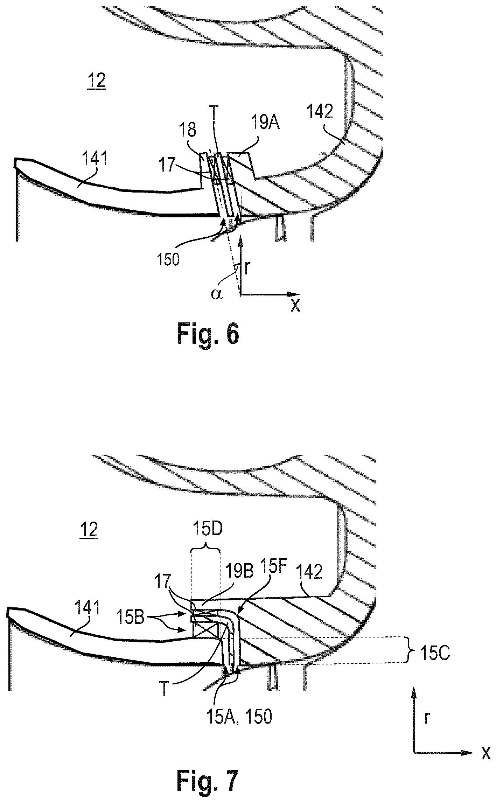

In der vorliegenden Offenbarung ist unter dem Begriff "Eintrittskanal" ein Kanal zu verstehen, der als Strömungseintrittskanal in den Stabilisatorraum dient. Typischerweise umfasst ein hierein beschriebener Eintrittskanal 150 eine hauptströmungskanalseitige Eintrittsöffnung 15A und eine stabilisatorraumseitige Austrittsöffnung 15B, wie es beispielhaft in den Figuren 5b und 7 gezeigt ist.

Gemäß einer Ausführungsform, die mit anderen hierin beschriebenen Ausführungsformen kombiniert werden kann, ist in mindestens zwei der zwei oder mehreren stromabliegenden Eintrittskanäle 150 jeweils mindestens ein Strömungsleitelement 17 angeordnet. Beispielsweise kann das mindestens eine Strömungsleitelement 17 in einem Eintrittskanal der zwei oder mehreren stromabliegenden Eintrittskanäle 150 unterschiedlich ausgebildet sein als in einem anderen Eintrittskanal der zwei oder mehreren stromabliegenden Eintrittskanäle 150, insbesondere hinsichtlich Anzahl und/oder Form. Zur Veranschaulichung zeigt Figur 5a eine erste Gruppe an Strömungsleitelementen 171 in einem ersten Eintrittskanal 151 und jeweils eine zweite Gruppe an Strömungsleitelementen 172 in einem zweiten Eintrittskanal 152 und einem dritten Eintrittskanal 153.

Gemäß einer Ausführungsform, die mit anderen hierin beschriebenen Ausführungsformen kombiniert werden kann, erstrecken sich die zwei oder mehreren stromabliegenden Eintrittskanäle 150 im Wesentlichen in radialer Richtung. In der vorliegenden Offenbarung ist unter dem Begriff "im Wesentlichen radial" ein Winkelbereich von -45°≤ α ≤ 45° oder geringer, insbesondere von -25°≤ α ≤ 25° oder geringer, relativ zur radialen Richtung r zu verstehen. Wie es beispielhaft in den Figuren dargestellt ist erstreckt sich die radiale Richtung r senkrecht zur zentralen Achse 11. Gemäß einem Beispiel ist unter "im Wesentlichen radial" ein Winkelbereich von ±10° oder geringer relativ zur radialen Richtung r zu verstehen. Zum besseren Verständnis sind in Figur 6 beispielhaft um einen Winkel α geneigte Eintrittskanäle 150 dargestellt, welche unter die oben angegebene Definition von "im Wesentlichen radial" fallen. Der Winkel α befindet sich in der x-r-Ebene.

Gemäß einer Ausführungsform, die mit anderen hierin beschriebenen Ausführungsformen kombiniert werden kann, können die zwei oder mehreren stromabliegenden Eintrittskanäle 150 einen sich im Wesentlichen radial erstreckenden Teil 15C und einen sich im Wesentlichen axial erstreckenden Teil 15D umfassen, wie es beispielhaft in Figur 7 dargestellt ist. Zwischen dem sich im Wesentlichen radial erstreckenden Teil 15C und dem sich im Wesentlichen in axial erstreckenden Teil 15D befindet sich typischer Weise ein gekrümmter Übergangsbereich 15F.

Die zwei oder mehreren stromabliegenden Eintrittskanäle 150 sind zwischen einem stromaufliegenden Teil 141 des Ringstegs 14 und einem stromabliegenden Teil 142 des Ringstegs 14 angeordnet, wie es beispielhaft in Figur 2 dargestellt ist. Der stromaufliegende Teil 141 des Ringstegs 14 weist erfindungsgemäß einen sich im Wesentlichen in radialer Richtung erstreckenden ersten Fortsatz 18 auf, wie es beispielhaft in Figur 4 gezeigt ist. Der stromabliegende Teil 142 des Ringstegs 14 kann einen sich im Wesentlichen in radialer Richtung erstreckenden zweiten Fortsatz 19A umfassen. Alternativ oder zusätzlich kann der stromabliegende Teil 142 des Ringstegs 14 einen sich im Wesentlichen in axialer Richtung erstreckenden zweiten Fortsatz 19B umfassen, wie es beispielsweise in Figur 7 dargestellt ist.

Gemäß einer Ausführungsform, die mit anderen hierin beschriebenen Ausführungsformen kombiniert werden kann, ist das mindestens eine Strömungsleitelement 17 in mindestens einem Ausströmbereich 15E der zwei oder mehreren Eintrittskanälen 150 des Stabilisatorraums angeordnet, wie es beispielhaft in Figur 5b gezeigt ist.

Unter dem Ausströmbereich eines hierin beschriebenen Eintrittskanals 150 ist der Bereich des Eintrittskanals 150 zu verstehen, welcher sich auf der Seite der stabilisatorraumseitigen Austrittsöffnung 15B befindet. Der Ausströmbereich kann sich beispielsweise über die Hälfte oder weniger der Eintrittskanallänge L erstrecken. Zum besseren Verständnis ist der Ausströmbereich 15E des Eintrittskanals 15 in Figur 5b beispielhaft dargestellt. Eine Anordnung des mindestens einen Strömungsleitelements 17 in einem Ausströmbereich des Eintrittskanals kann sich günstig auf Strömungsverluste und Schaufelschwingungsanregung auswirken.

Gemäß einer Ausführungsform, die mit anderen hierin beschriebenen Ausführungsformen kombiniert werden kann, kann in dem stromaufliegenden Strömungsaustritt 16 mindestens ein weiteres Trennelement T angeordnet sein, so dass eine Ausströmung aus dem ringförmigen Stabilisatorraum 12 quer zur Hauptströmungsrichtung 1 des Hauptströmungskanals 13 gesplittet wird. Insbesondere ist das mindestens eine Trennelement T in dem stromaufliegenden Strömungsaustritt 16 derart angeordnet, dass zwei oder mehrere stromaufliegende Austrittskanäle 160 bereitgestellt werden.

Wie in den Figuren 8a und 8b dargestellt ist, sind die zwei oder mehreren stromaufliegenden Austrittskanäle 160 axial voneinander beabstandet. Ferner, kann mindestens ein Austrittskanal der zwei oder mehrere stromaufliegenden Austrittskanäle 160 unterschiedlich ausgebildet sein als der oder die anderen Austrittskanäle. Insbesondere unterscheidet sich mindestens ein Austrittskanal der zwei oder mehreren stromaufliegenden Austrittskanälen 160 hinsichtlich der Kanalweite und/oder der Kanalform von dem oder den anderen Austrittskanälen. Beispielsweise, kann der mindestens eine Austrittskanal eine geringere Austrittskanalweite aufweisen als der oder die anderen Austrittskanäle der zwei oder mehreren stromaufliegenden Austrittskanälen. Es sei darauf hingewiesen, dass die zwei oder mehreren stromaufliegenden Austrittskanäle 160 auch gleich ausgestaltet sein können.

Gemäß einer Ausführungsform, die mit anderen hierin beschriebenen Ausführungsformen kombiniert werden kann, sind in mindestens zwei der zwei oder mehreren stromaufliegenden Austrittskanäle 160 jeweils mindestens ein Strömungsleitelement 17 angeordnet, wie es beispielhaft in Figur 8b dargestellt ist. Beispielsweise kann das mindestens eine Strömungsleitelement 17 in einem der zwei oder mehreren stromaufliegenden Austrittskanäle 160 unterschiedlich ausgebildet sein als in einem anderen der zwei oder mehreren stromaufliegenden Austrittskanäle 160, insbesondere hinsichtlich Anzahl und/oder Form.

Gemäß einer Ausführungsform, die mit anderen hierin beschriebenen Ausführungsformen kombiniert werden kann, erstrecken sich die zwei oder mehreren stromaufliegenden Austrittskanäle 160 im Wesentlichen in radialer Richtung.

Gemäß einer Ausführungsform, die mit anderen hierin beschriebenen Ausführungsformen kombiniert werden kann, sind die zwei oder mehreren stromaufliegenden Austrittskanäle 160 zwischen einer Hauptströmungskanalwand 131 und einem stromaufliegenden Teil 141 des Ringstegs 14 angeordnet, wie es beispielhaft in den Figuren 8a und 8b dargestellt ist. Insbesondere sind die zwei oder mehreren stromaufliegenden Austrittskanäle 160 zwischen einem sich im Wesentlichen in radialer Richtung erstreckenden dritten Fortsatz 18A des stromaufliegenden Teils 141 des Ringstegs 14 und einem sich im Wesentlichen in radialer Richtung erstreckenden Fortsatz 132 der Hauptströmungskanalwand 131 angeordnet.

Gemäß einer Ausführungsform, die mit anderen hierin beschriebenen Ausführungsformen kombiniert werden kann, ist das mindestens ein Strömungsleitelement 17 in mindestens einem Einströmbereich 16E der zwei oder mehrere Austrittskanäle 160 des Stabilisatorraums angeordnet, wie es beispielhaft in Figur 8b dargestellt ist.

Unter dem Einströmbereich 16E eines hierin beschriebenen Austrittskanals 160 ist der Bereich des Austrittskanals 160 zu verstehen, welcher sich auf der Seite der Stabilisatorraums 12 befindet. Der Einströmbereich 16E kann sich beispielsweise über die Hälfte oder weniger der Austrittskanallänge erstrecken.

Gemäß einer Ausführungsform, die mit anderen hierin beschriebenen Ausführungsformen kombiniert werden kann, ist das mindestens eine Strömungsleitelement 17 ausgebildet und angeordnet, um ein durchströmbares Umlenkgitter bereitzustellen. Das durchströmbare Umlenkgitter kann ein im Wesentlichen radial durchströmbares Umlenkgitter sein.

Gemäß einer alternativen Ausführungsform, die mit anderen hierin beschriebenen Ausführungsformen kombiniert werden kann, ist das mindestens eine Strömungsleitelement 17 derart ausgebildet und angeordnet, um ein im Wesentlichen axial durchströmbares Umlenkgitter bereitzustellen, wie es beispielhaft in Figur 7 gezeigt ist. In der vorliegenden Offenbarung ist unter dem Begriff "im Wesentlichen axial" ein Winkelbereich von ± 45° oder geringer, insbesondere ± 25° oder geringer, relativ zur axialen Richtung x zu verstehen. Wie beispielhaft in Fig. 7 dargestellt ist erstreckt sich die axiale Richtung x entlang der zentralen Achse 11. Gemäß einem Beispiel ist unter "im Wesentlichen axial" ein Winkelbereich von ±10° oder geringer relativ zur axialen Richtung x zu verstehen. Ein im Wesentlichen axial durchströmbares Umlenkgitter kann beispielsweise durch eine Konfiguration der Eintrittskanäle 150 des Stabilisatorraums und eine Anordnung des mindestens einen Strömungsleitelements 17 gemäß Figur 7 bereitgestellt werden.

Gemäß einer Ausführungsform, die mit anderen hierin beschriebenen Ausführungsformen kombiniert werden kann, ist mindestens eine Strömungsleitelement des mindestens einen Strömungsleitelements 17 als separates Bauteil ausgeführt ist.

Gemäß einer Ausführungsform, die mit anderen hierin beschriebenen Ausführungsformen kombiniert werden kann, ist mindestens ein Strömungsleitelement des mindestens einen Strömungsleitelements 17 integral (einteilig) mit mindestens einem angrenzenden Bauteil ausgebildet. Wie aus den Figuren ersichtlich ist sind die an das mindestens eine Strömungsleitelement 17 angrenzenden Bauteile das Trennelement T, der stromaufliegenden Teil 141 des Ringstegs 14, insbesondere mit dem ersten Fortsatz 18 und/oder dem dritten Fortsatz 18A, der stromabliegenden Teil 142 des Ringstegs 14, insbesondere mit dem zweiten Fortsatz 19A oder 19B, und die Hauptströmungskanalwand 131, insbesondere mit dem Fortsatz 132.

Gemäß einer Ausführungsform, die mit anderen hierin beschriebenen Ausführungsformen kombiniert werden kann, ist mindestens eines, insbesondere mindestens die Hälfte oder alle, der mehreren Strömungsleitelemente 17 aus Curtis-artigen Schaufelprofilen gebildet. Insbesondere kann mindestens eines, insbesondere mindestens die Hälfte oder alle der mehreren Strömungsleitelemente 17 prismatische, Curtis-artige Schaufeln sein. Typischerweise, sind die Strömungsleitelemente 17 als radiale Umlenkschaufeln ausgebildet. Eine Ausführung der Strömungsleitelemente aus Curtis-artigen Schaufelprofilen, insbesondere Strömungsleitelemente in Form von prismatischen Curtis-artigen Schaufeln, hat den Vorteil, dass diese relativ dick ausgeführt werden können, so dass eine bessere Verbindung der Strömungsleitelemente 17 mit den angrenzenden Bauteilen ermöglicht wird, beispielsweise mittels Verschraubung oder anderen hierin angegebenen geeigneten Verbindungsarten.

Gemäß einer Ausführungsform, die mit anderen hierin beschriebenen Ausführungsformen kombiniert werden kann, weist der stromabliegende Teil 142 des Ringstegs 14 einen Zentrierabsatz, insbesondere einen zylindrischen oder konischen Zentrierabsatz, auf. Alternativ oder zusätzlich kann das Trennelement T einen Zentrierabsatz, insbesondere einen zylindrischen oder konischen Zentrierabsatz, aufweisen. Alternativ oder zusätzlich kann der stromaufliegenden Teil 141 des Ringstegs 14 einen Zentrierabsatz, insbesondere einen zylindrischen oder konischen Zentrierabsatz, aufweisen.

Gemäß einer Ausführungsform, die mit anderen hierin beschriebenen Ausführungsformen kombiniert werden kann, ist der stromaufliegende Teil 141 des Ringstegs 14 und der stromabliegende Teil 142 des Ringstegs 14 über das mindestens eine Strömungsleitelement 17, insbesondere über mehrere Strömungsleitelemente 17 und das Trennelement T, verbunden, beispielsweise mittels einer Verschraubung oder Verstiftung. Die Verschraubung oder Verstiftung kann sich durch das mindestens eine Strömungsleitelement 17, insbesondere durch eines oder mehrere Strömungsleitelemente 17 und das Trennelement T, erstrecken. Es sei angemerkt, dass die Verschraubungen oder Verstiftungen auch auf andere Weise ausgeführt werden können, d.h. so dass sie sich nicht durch das mindestens eine Strömungsleitelement 17 oder das Trennelement T erstecken. Alternativ oder zusätzlich können auch andere Verdingungsarten wie zum Beispiel Schrumpfen oder Klemmen verwendet werden.

Gemäß einer Ausführungsform, die mit anderen hierin beschriebenen Ausführungsformen kombiniert werden kann, weist das mindestens eine Strömungsleitelement 17 einen Zentriersitz auf, der ausgebildet ist, um das mindestens eine Strömungsleitelement 17 in dem stromabliegenden Strömungseintritt 15, insbesondere in einem oder mehreren stromabliegenden Eintrittskanälen umlaufend, insbesondere konzentrisch, um die zentralen Achse 11 des Hauptströmungskanals 13 anzuordnen. Alternativ oder zusätzlich weist das mindestens eine Strömungsleitelement 17 einen Zentriersitz auf, der ausgebildet ist, um das mindestens eine Strömungsleitelement 17 in dem stromaufliegende Strömungsaustritt 16, insbesondere in einem oder mehreren stromaufliegenden Austrittskanälen umlaufend, insbesondere konzentrisch, um die zentralen Achse 11 des Hauptströmungskanals 13 anzuordnen. Der Zentriersitz kann beispielsweise mittels einem oder mehreren Zentrierelementen, einem oder mehreren Zentrierstiften, oder einem Zentrierrand an den zu zentrierenden Bauteilen realisiert werden.

Gemäß einer Ausführungsform, die mit anderen hierin beschriebenen Ausführungsformen kombiniert werden kann, weist das mindestens eine Strömungsleitelement 17 ein einströmseitiges Ende 17A und ein abströmseitiges Ende 17B auf. Das abströmseitige Ende des mindestens einen Strömungsleitelements 17 kann relativ zu dem einströmseitigen Ende 17A des mindestens einen Strömungsleitelements 17 in Umfangsrichtung geneigt sein, so dass beim Durchströmen ein Drall abgebaut wird oder ein Gegendrall erzeugt wird. Zur Erläuterung sind in den Figuren 9a und 10a Ausschnitte eines stromabliegenden Eintrittskanals 150 mit mehreren Strömungsleitelementen 17 dargestellt, wobei die Rotationsrichtung 2 des Verdichterrades welche zu einer mit Drall beaufschlagten Strömung führt eingezeichnet ist. Figur 9a zeigt eine Konfiguration der Strömungsleitelemente 17, mit welcher beim Durchströmen ein Gegendrall erzeugt werden kann, wie es beispielhaft durch die Pfeile zwischen den einströmseitigen Enden 17A und den abströmseitigen Enden 17B in Figur 9a dargestellt ist. Figur 9b zeigt eine schematische Ansicht einer Konfiguration von Strömungsleitelementen 17 in einem stromaufliegenden Austrittskanal 160 zum Erzeugen eines Strömungsgegendralls beim Durchströmen der Leitelemente. Figur 10a zeigt eine Konfiguration der Strömungsleitelemente 17 in einem stromabliegenden Eintrittskanal 150, mit welcher beim Durchströmen ein Drall abgebaut werden kann. Figur 10b zeigt eine schematische Ansicht einer Konfiguration von Strömungsleitelementen 17 in einem stromaufliegenden Austrittskanal 160 zum Abbau eines Strömungsdralls beim Durchströmen der Leitelemente.

Ferner sei angemerkt, dass die Strömungsleitelemente 17 bündig mit der hauptströmungskanalseitige Eintrittsöffnung eines hierin beschriebenen Eintrittskanals 150 und/oder bündig mit der stabilisatorraumseitige Austrittsöffnung eines hierin beschriebenen Eintrittskanals 150 ausgeführt sein können. Alternativ können die Strömungsleitelemente 17 von der hauptströmungskanalseitige Eintrittsöffnung eines hierin beschriebenen Eintrittskanals 150 und/oder von der stabilisatorraumseitige Austrittsöffnung eines hierin beschriebenen Eintrittskanals 150 beabstandet sein.

Auf ähnliche Weise können die Strömungsleitelemente 17 bündig mit der hauptströmungskanalseitigen Austrittsöffnung eines hierin beschriebenen Austrittskanals 160 und/oder bündig mit der stabilisatorraumseitige Eintrittsöffnung eines hierin beschriebenen Austrittskanals 160 ausgeführt sein. Alternativ können die Strömungsleitelemente 17 von der hauptströmungskanalseitige Austrittsöffnung eines hierin beschriebenen Austrittskanals 160 und/oder von der stabilisatorraumseitige Eintrittsöffnung eines hierin beschriebenen Austrittskanals 160 beabstandet sein.

Gemäß einer Ausführungsform, die mit anderen hierin beschriebenen Ausführungsformen kombiniert werden kann, ist der ringförmige Stabilisatorraum 12 schaufellos. Mit anderen Worten, in dem ringförmigen Stabilisatorraum 12 sind keine Schaufeln, insbesondere keine Strömungsleitschaufeln, angeordnet. Insbesondere, kann der ringförmige Stabilisatorraum 12 auch strebenlos sein. Mit anderen Worten, der ringförmige Stabilisatorraum 12 kann schaufellos und strebenlos sein, so dass weder Strömungsleitschaufeln noch Streben in dem ringförmigen Stabilisatorraum 12 vorhanden sind.

Gemäß einem zweiten Aspekt der vorliegenden Offenbarung wird ein Verdichter 20, insbesondere ein Radialverdichter oder ein Diagonalverdichter, bereitgestellt der ein Verdichterrad 21 und einen Stabilisatorkanal 10 gemäß einer der hierein beschriebenen Ausführungsformen umfasst. Gemäß einer Ausführungsform, die mit anderen hierin beschriebenen Ausführungsformen kombiniert werden kann, umfasst das Verdichterrad 21 im Bereich des Strömungseintritts 15 eine Anzahl N₁ an Verdichterradschaufeln 23 und eine Anzahl N₂ an Leitelementen des mindestens einen Strömungsleitelements 17 ist N₂ ≥ 1.5×N₁.

Somit kann vorteilhafterweise ein Verdichter mit verbesserter Kennfeldbreite und Kennliniensteigung, insbesondere mit reduzierter Geräusch- und Schwingungsentwicklung im Betrieb des Verdichters, bereitgestellt werden.

Ein dritter Aspekt der Erfindung betrifft eine Strömungsmaschine, insbesondere einen Turbolader mit einem Verdichter gemäß einer der hierein beschriebenen Ausführungsformen, so dass vorteilhafterweise eine Strömungsmaschine, insbesondere einen Turbolader, bereitgestellt wird, der gegenüber dem Stand der Technik verbessert ist.

## Patentansprüche

1. Verdichtergehäuse (5) eines Verdichters, insbesondere eines Radialverdichters oder Diagonalverdichters, umfassend einen Stabilisatorkanal (10) mit einem ringförmigen Stabilisatorraum (12), welcher einen Hauptströmungskanal (13) im Ansaugbereich eines Verdichterrades (21) umgibt und durch einen Ringsteg (14) gegenüber dem Hauptströmungskanal (13) abgegrenzt ist, wobei der ringförmige Stabilisatorraum (12) über einen stromabliegenden Strömungseintritt (15) und einen stromaufliegenden Strömungsaustritt (16) mit dem Hauptströmungskanal (13) in Verbindung steht, wobei im Strömungseintritt (15) mindestens ein Trennelement (T) angeordnet ist, so dass eine Einströmung in den ringförmigen Stabilisatorraum (12) quer zur Hauptströmungsrichtung (1) des Hauptströmungskanals (13) gesplittet wird, und wobei in dem Strömungseintritt (15) mindestens ein Strömungsleitelement (17) angeordnet ist, wobei das mindestens eine Trennelement (T) in dem Strömungseintritt (15) derart angeordnet ist, dass zwei oder mehrere stromabliegende Eintrittskanäle (150) bereitgestellt werden, wobei die zwei oder mehreren stromabliegenden Eintrittskanäle (150) zwischen einem stromaufliegenden Teil (141) des Ringstegs (14) und einem stromabliegenden Teil (142) des Ringstegs (14) angeordnet sind, **dadurch gekennzeichnet, dass** der stromaufliegende Teil (141) des Ringstegs (14) einen sich im Wesentlichen in radialer Richtung erstreckenden ersten Fortsatz (18) und/oder der stromabliegende Teil (142) des Ringstegs (14) einen sich im Wesentlichen in radialer Richtung erstreckenden zweiten Fortsatz (19A) umfassen, und/oder wobei der stromabliegende Teil (142) des Ringstegs (14) einen sich im Wesentlichen in axialer Richtung erstreckenden zweiten Fortsatz (19B) umfasst.

2. Verdichtergehäuse (5) nach Anspruch 1, wobei mindestens ein Eintrittskanal der zwei oder mehreren stromabliegenden Eintrittskanäle (150) unterschiedlich ausgebildet ist, insbesondere hinsichtlich der Kanalweite und/oder der Kanalform, insbesondere wobei der mindestens eine Eintrittskanal eine geringere Eintrittskanalweite hat als der oder die anderen Eintrittskanäle der zwei oder mehreren stromabliegenden Eintrittskanäle, und/oder insbesondere wobei der mindestens eine Eintrittskanal eine Querschnittsverjüngung (173) in radialer Richtung aufweist.

3. Verdichtergehäuse (5) nach Anspruch 1 oder 2, wobei das mindestens eine Trennelement (T) in dem Strömungseintritt (15) derart angeordnet ist, dass zwei oder mehrere stromabliegende Eintrittskanäle (150) bereitgestellt werden, wobei in mindestens zwei der zwei oder mehreren stromabliegenden Eintrittskanäle (150) jeweils mindestens ein Strömungsleitelement (17) angeordnet ist, insbesondere wobei das mindestens eine Strömungsleitelement (17) in einem der zwei oder mehreren stromabliegenden Eintrittskanäle (150) unterschiedlich ausgebildet ist als in einem anderen der zwei oder mehreren stromabliegenden Eintrittskanäle (150), insbesondere hinsichtlich Anzahl und/oder Form.

4. Verdichtergehäuse (5) nach Anspruch 2 oder 3, wobei sich die zwei oder mehreren stromabliegenden Eintrittskanäle (150) im Wesentlichen in radialer Richtung erstrecken, oder wobei die zwei oder mehreren stromabliegenden Eintrittskanäle (150) einen sich im Wesentlichen radial erstreckenden Teil (15C) und einen sich im Wesentlichen axial erstreckenden Teil (15D) umfassen.

5. Verdichtergehäuse (5) nach einem der Ansprüche 2 bis 4, wobei das mindestens eine Strömungsleitelement (17) in mindestens einem Ausströmbereich (15E) der zwei oder mehreren Eintrittskanäle des Stabilisatorraums angeordnet ist.

6. Verdichtergehäuse (5) nach einem der Ansprüche 1 bis 5, wobei mindestens ein weiteres Trennelement (T) in dem stromaufliegenden Strömungsaustritt (16) derart angeordnet ist, so dass eine Ausströmung aus dem ringförmigen Stabilisatorraum (12) quer zur Hauptströmungsrichtung (1) des Hauptströmungskanals (13) gesplittet wird, wobei zwei oder mehrere stromaufliegende Austrittskanäle (160) bereitgestellt werden, insbesondere wobei mindestens ein Austrittskanal der zwei oder mehreren stromaufliegenden Austrittskanäle (160) unterschiedlich ausgebildet ist, insbesondere hinsichtlich der Kanalweite und/oder der Kanalform.

7. Verdichtergehäuse (5) nach Anspruch 6, wobei in mindestens zwei der zwei oder mehreren stromaufliegenden Austrittskanäle (160) jeweils mindestens ein Strömungsleitelement (17) angeordnet sind, insbesondere wobei das mindestens eine Strömungsleitelement (17) in einem der zwei oder mehreren stromaufliegenden Austrittskanäle (160) unterschiedlich ausgebildet ist als in einem anderen der zwei oder mehreren stromaufliegenden Austrittskanäle (160), insbesondere hinsichtlich Anzahl und/oder Form.

8. Verdichtergehäuse (5) nach Anspruch 6 oder 7, wobei sich die zwei oder mehreren stromaufliegenden Austrittskanäle (160) im Wesentlichen in radialer Richtung erstrecken, und/oder wobei die zwei oder mehreren stromaufliegenden Austrittskanäle (160) zwischen einer Hauptströmungskanalwand (131) und einem stromaufliegenden Teil (141) des Ringstegs (14) angeordnet sind, insbesondere wobei die zwei oder mehreren stromaufliegenden Austrittskanäle (160) zwischen einem sich im Wesentlichen in radialer Richtung erstreckenden dritten Fortsatz (18A) des stromaufliegenden Teils (141) des Ringstegs (14) und einem sich im Wesentlichen in radialer Richtung erstreckenden Fortsatz (132) der Hauptströmungskanalwand (131) angeordnet sind, und/oder wobei das mindestens ein Strömungsleitelement (17) in mindestens einem Einströmbereich (16E) der zwei oder mehrere Austrittskanäle (160) des Stabilisatorraums angeordnet sind.

9. Verdichtergehäuse (5) nach einem der Ansprüche 1 bis 8, wobei das mindestens eine Strömungsleitelement (17) ausgebildet und angeordnet ist, um ein durchströmbares Umlenkgitter, insbesondere ein im Wesentlichen radial durchströmbares Umlenkgitter und/oder ein im Wesentlichen axial durchströmbares Umlenkgitter, bereitzustellen.

10. Verdichtergehäuse (5) nach einem der Ansprüche 1 bis 9, wobei mindestens eines des mindestens einen Strömungsleitelements (17) als separates Bauteil ausgeführt ist, und/oder wobei mindestens eines des mindestens einen Strömungsleitelements (17) integral mit mindestens einem angrenzenden Bauteil ausgebildet ist.

11. Verdichtergehäuse (5) nach einem der Ansprüche 1 bis 10, wobei der stromabliegende Teil (142) des Ringstegs (14) und/oder das Trennelement (T) und/oder der stromaufliegende Teil (141) des Ringstegs (14) einen Zentrierabsatz, insbesondere einen zylindrischen oder konischen Zentrierabsatz, aufweisen.

12. Verdichtergehäuse (5) nach einem der Ansprüche 1 bis 11, wobei das mindestens eine Strömungsleitelement (17) einen Zentriersitz aufweist, der ausgebildet ist, um das mindestens eine Strömungsleitelement (17) in dem stromabliegenden Strömungseintritt (15) und/oder in dem stromaufliegenden Strömungsaustritt (16) umlaufend, insbesondere konzentrisch, um die zentrale Achse (11) des Hauptströmungskanals (13) anzuordnen.

13. Verdichtergehäuse (5) nach einem der Ansprüche 1 bis 12, wobei das mindestens eine Strömungsleitelement (17) ein einströmseitiges Ende (17A) und ein abströmseitiges Ende (17B) aufweist, wobei das abströmseitige Ende (17B) relativ zu dem einströmseitigen Ende (17A) in Umfangsrichtung geneigt ist, so dass beim Durchströmen ein Drall abgebaut wird oder ein Gegendrall erzeugt wird.

14. Verdichter (20), insbesondere Radialverdichter oder Diagonalverdichter, mit einem Verdichterrad (21) und einem Verdichtergehäuse (5) gemäß einem der Ansprüche 1 bis 13, insbesondere wobei das Verdichterrad (21) im Bereich des Strömungseintritts (15) in den Stabilisatorkanal (10) eine Anzahl N₁ an Verdichterradschaufeln (23) umfasst und mit einer Anzahl N₂ an Leitelementen des mindestens einen Strömungsleitelements (17), wobei die Anzahl N₂ ≥ 1.5×N₁ ist.

15. Strömungsmaschine, insbesondere Turbolader, mit einem Verdichter (20) nach Anspruch 14.

## Claims

1. Compressor housing (5) of a compressor, in particular of a radial compressor or diagonal compressor, comprising a stabilizer channel (10) having an annular stabilizer chamber (12), which surrounds a main flow channel (13) in the intake region of a compressor wheel (21) and is delimited with respect to the main flow channel (13) by an annular web (14), wherein the annular stabilizer chamber (12) is connected to the main flow channel (13) via a downstream flow inlet (15) and an upstream flow outlet (16), wherein at least one separating element (T) is arranged in the flow inlet (15), with the result that an inflow into the annular stabilizer chamber (12) is split transversely with respect to the main flow direction (1) of the main flow channel (13), and wherein at least one flow guiding element (17) is arranged in the flow inlet (15), wherein the at least one separating element (T) is arranged in the flow inlet (15) in such a way that two or more downstream inlet channels (150) are provided, wherein the two or more downstream inlet channels (150) are arranged between an upstream part (141) of the annular web (14) and a downstream part (142) of the annular web (14), **characterized in that**
the upstream part (141) of the annular web (14) comprises a first extension (18), which extends substantially in the radial direction, and/or the downstream part (142) of the annular web (14) comprises a second extension (19A), which extends substantially in the radial direction, and/or wherein the downstream part (142) of the annular web (14) comprises a second extension (19B), which extends substantially in the axial direction.

2. Compressor housing (5) according to Claim 1, wherein at least one inlet channel of the two or more downstream inlet channels (150) is of different design, in particular in respect of the channel width and/or the channel shape, in particular wherein the at least one inlet channel has a smaller inlet channel width than the other inlet channel or channels of the two or more downstream inlet channels, and/or, in particular, wherein the at least one inlet channel has a cross-sectional taper (173) in the radial direction.

3. Compressor housing (5) according to Claim 1 or 2, wherein the at least one separating element (T) is arranged in the flow inlet (15) in such a way that two or more downstream inlet channels (150) are provided, wherein at least one flow guiding element (17) is arranged in each of at least two of the two or more downstream inlet channels (150), in particular wherein the at least one flow guiding element (17) is designed differently in one of the two or more downstream inlet channels (150) than in another of the two or more downstream inlet channels (150), in particular in respect of number and/or shape.

4. Compressor housing (5) according to Claim 2 or 3, wherein the two or more downstream inlet channels (150) extend substantially in the radial direction, or wherein the two or more downstream inlet channels (150) comprise a substantially radially extending part (15C) and a substantially axially extending part (15D).

5. Compressor housing (5) according to any one of Claims 2 to 4, wherein the at least one flow guiding element (17) is arranged in at least one outflow region (15E) of the two or more inlet channels of the stabilizer chamber.

6. Compressor housing (5) according to any one of Claims 1 to 5, wherein at least one further separating element (T) is arranged in the upstream flow outlet (16) in such a way that an outflow from the annular stabilizer chamber (12) is split transversely with respect to the main flow direction (1) of the main flow channel (13), wherein two or more upstream outlet channels (160) are provided, in particular wherein at least one outlet channel of the two or more upstream outlet channels (160) is designed differently, in particular in respect of the channel width and/or the channel shape.

7. Compressor housing (5) according to Claim 6, wherein at least one flow guiding element (17) is arranged in each of at least two of the two or more upstream outlet channels (160), in particular wherein the at least one flow guiding element (17) is designed differently in one of the two or more upstream outlet channels (160) than in another of the two or more upstream outlet channels (160), in particular in respect of number and/or shape.

8. Compressor housing (5) according to Claim 6 or 7, wherein the two or more upstream outlet channels (160) extend substantially in the radial direction, and/or wherein the two or more upstream outlet channels (160) are arranged between a main flow channel wall (131) and an upstream part (141) of the annular web (14), in particular wherein the two or more upstream outlet channels (160) are arranged between a third extension (18A), extending substantially in the radial direction, of the upstream part (141) of the annular web (14) and an extension (132), extending substantially in the radial direction, of the main flow channel wall (131), and/or wherein the at least one flow guiding element (17) is arranged in at least one inflow region (16E) of the two or more outlet channels (160) of the stabilizer chamber.

9. Compressor housing (5) according to any one of Claims 1 to 8, wherein the at least one flow guiding element (17) is designed and arranged in order to provide a deflecting grid through which flow can occur, in particular a deflecting grid through which flow can occur substantially radially and/or a deflecting grid through which flow can occur substantially axially.

10. Compressor housing (5) according to any one of Claims 1 to 9, wherein at least one of the at least one flow guiding elements (17) is embodied as a separate component, and/or wherein at least one of the at least one flow guiding elements (17) is formed integrally with at least one adjacent component.

11. Compressor housing (5) according to any one of Claims 1 to 10, wherein the downstream part (142) of the annular web (14) and/or the separating element (T) and/or the upstream part (141) of the annular web (14) have/has a centring shoulder, in particular a cylindrical or conical centring shoulder.

12. Compressor housing (5) according to any one of Claims 1 to 11, wherein the at least one flow guiding element (17) has a centring seat, which is designed for arrangement of the at least one flow guiding element (17) circumferentially, in particular concentrically, around the central axis (11) of the main flow channel (13) in the downstream flow inlet (15) and/or in the upstream flow outlet (16).

13. Compressor housing (5) according to any one of Claims 1 to 12, wherein the at least one flow guiding element (17) has an inflow end (17A) and an outflow end (17B), wherein the outflow end (17B) is inclined in the circumferential direction relative to the inflow end (17A), thus ensuring that a swirl is reduced or a counter-swirl is generated during through flow.

14. Compressor (20), in particular radial compressor or diagonal compressor, having a compressor wheel (21) and a compressor housing (5) according to any one of Claims 1 to 13, in particular wherein the compressor wheel (21) comprises, in the region of the flow inlet (15) into the stabilizer channel (10), a number N₁ of compressor wheel blades (23) and a number N₂ of guiding elements of the at least one flow guiding element (17), wherein the number N₂ is ≥ 1.5 × N₁.

15. Turbomachine, in particular turbocharger, having a compressor (20) according to Claim 14.

## Revendications

1. Carter (5) de compresseur d'un compresseur, en particulier d'un compresseur radial ou d'un compresseur diagonal, comprenant un canal stabilisateur (10) présentant un espace stabilisateur annulaire (12), qui entoure un canal d'écoulement principal (13) dans la zone d'aspiration d'une roue (21) de compresseur et qui est délimité par une nervure annulaire (14) par rapport au canal d'écoulement principal (13), dans lequel l'espace stabilisateur annulaire (12) est relié au canal d'écoulement principal (13) par l'intermédiaire d'une entrée d'écoulement en aval (15) et d'une sortie d'écoulement en amont (16), dans lequel au moins un élément de séparation (T) est agencé dans l'entrée d'écoulement (15) de telle sorte qu'un écoulement entrant dans l'espace stabilisateur annulaire (12) transversalement par rapport au sens d'écoulement principal (1) du canal d'écoulement principal (13) est divisé et dans lequel au moins un élément de guidage d'écoulement (17) est agencé dans l'entrée d'écoulement (15), dans lequel ledit au moins un élément de séparation (T) est agencé dans l'entrée d'écoulement (15) de telle sorte que deux canaux d'entrée en aval (150) ou plus sont mis à disposition, dans lequel lesdits deux canaux d'entrée en aval (150) ou plus sont agencés entre une partie en amont (141) de la nervure annulaire (14) et une partie en aval (142) de la nervure annulaire (14), **caractérisé en ce que**
la partie en amont (141) de la nervure annulaire (14) comprend une première saillie (18) s'étendant sensiblement dans la direction radiale et/ou la partie en aval (142) de la nervure annulaire (14) comprend une deuxième saillie (19A) s'étendant sensiblement dans la direction radiale et/ou la partie en aval (142) de la nervure annulaire (14) comprenant une deuxième saillie (19B) s'étendant sensiblement dans la direction axiale.

2. Carter (5) de compresseur selon la revendication 1, dans lequel au moins un canal d'entrée parmi lesdits deux canaux d'entrée en aval (150) ou plus est conçu différemment, en particulier en ce qui concerne la largeur de canal et/ou la forme de canal, en particulier, dans lequel ledit au moins un canal d'entrée présente une largeur de canal d'entrée inférieure à celle du ou des autres canaux d'entrée parmi lesdits deux canaux d'entrée en aval ou plus et/ou, en particulier, dans lequel ledit au moins un canal d'entrée présente un rétrécissement transversal (173) dans la direction radiale.

3. Carter (5) de compresseur selon la revendication 1 ou 2, dans lequel ledit au moins un élément de séparation (T) dans l'entrée d'écoulement (15) est agencé de telle sorte que deux canaux d'entrée en aval (150) ou plus sont mis à disposition, dans lequel à chaque fois au moins un élément de guidage d'écoulement (17) est agencé dans au moins deux desdits deux canaux d'entrée en aval (150) ou plus, en particulier dans lequel ledit au moins un élément de guidage d'écoulement (17) est conçu différemment dans l'un des deux canaux d'entrée en aval (150) ou plus que dans un autre desdits deux canaux d'entrée en aval (150) ou plus, en particulier en ce qui concerne le nombre et/ou la forme.

4. Carter (5) de compresseur selon la revendication 2 ou 3, dans lequel lesdits deux canaux d'entrée en aval (150) ou plus s'étendent sensiblement dans la direction radiale ou dans lequel lesdits deux canaux d'entrée en aval (150) ou plus comprennent une partie (15C) s'étendant de manière sensiblement radiale et une partie (15D) s'étendant de manière sensiblement axiale.

5. Carter (5) de compresseur selon l'une des revendications 2 à 4, dans lequel ledit au moins un élément de guidage d'écoulement (17) est agencé dans au moins une zone d'écoulement de sortie (15E) desdits deux canaux d'entrée ou plus de l'espace stabilisateur.

6. Carter (5) de compresseur selon l'une des revendications 1 à 5, dans lequel au moins un autre élément de séparation (T) est agencé dans la sortie d'écoulement en amont (16) de telle sorte qu'un écoulement de sortie sortant de l'espace stabilisateur annulaire (12) est divisé transversalement par rapport au sens d'écoulement principal (1) du canal d'écoulement principal (13), dans lequel deux canaux de sortie en amont (160) ou plus sont mis à disposition, en particulier dans lequel au moins un canal de sortie desdits deux canaux de sortie en amont (160) ou plus est conçu différemment, en particulier en ce qui concerne la largeur de canal et/ou la forme de canal.

7. Carter (5) de compresseur selon la revendication 6, dans lequel à chaque fois au moins un élément de guidage d'écoulement (17) est agencé dans au moins deux desdits deux canaux de sortie en amont (160) ou plus, en particulier dans lequel ledit au moins un élément de guidage d'écoulement (17) est conçu différemment dans l'un des deux canaux de sortie en amont (160) ou plus que dans un autre desdits deux canaux de sortie en amont (160) ou plus, en particulier en ce qui concerne le nombre et/ou la forme.

8. Carter (5) de compresseur selon la revendication 6 ou 7, dans lequel lesdits deux canaux de sortie en amont (160) ou plus s'étendent sensiblement dans la direction radiale et/ou dans lequel lesdits deux canaux de sortie en amont (160) ou plus sont agencés entre une paroi (131) de canal d'écoulement principal et une partie en amont (141) de la nervure annulaire (14), en particulier dans lequel lesdits deux canaux de sortie en amont (160) ou plus sont agencés entre une troisième saillie (18A) s'étendant sensiblement dans la direction radiale de la partie en amont (141) de la nervure annulaire (14) et une saillie (132) s'étendant sensiblement dans la direction radiale de la paroi (131) de canal d'écoulement principal et/ou dans lequel ledit au moins un élément de guidage d'écoulement (17) est agencé dans au moins une zone d'écoulement d'entrée (16E) desdits deux canaux de sortie (160) ou plus de l'espace stabilisateur.

9. Carter (5) de compresseur selon l'une des revendications 1 à 8, dans lequel ledit au moins un élément de guidage d'écoulement (17) est conçu et agencé pour mettre à disposition une grille de déviation pouvant être traversée, en particulier une grille de déviation pouvant être traversée de manière sensiblement radiale et/ou une grille de déviation pouvant être traversée de manière sensiblement axiale.

10. Carter (5) de compresseur selon l'une des revendications 1 à 9, dans lequel au moins l'un dudit au moins un élément de guidage d'écoulement (17) est réalisé sous forme de composant séparé et/ou dans lequel au moins l'un dudit au moins un élément de guidage d'écoulement (17) est conçu d'une seule pièce avec au moins un composant adjacent.

11. Carter (5) de compresseur selon l'une des revendications 1 à 10, dans lequel la partie en aval (142) de la nervure annulaire (14) et/ou l'élément de séparation (T) et/ou la partie en amont (141) de la nervure annulaire (14) présentent un ergot de centrage, en particulier un ergot de centrage cylindrique ou conique.

12. Carter (5) de compresseur selon l'une des revendications 1 à 11, dans lequel ledit au moins un élément de guidage d'écoulement (17) présente un siège de centrage qui est conçu pour agencer ledit au moins un élément de guidage d'écoulement (17) dans l'entrée d'écoulement en aval (15) et/ou dans la sortie d'écoulement en amont (16) de manière périphérique, en particulier concentrique, autour de l'axe central (11) du canal d'écoulement principal (13).

13. Carter (5) de compresseur selon l'une des revendications 1 à 12, dans lequel ledit au moins un élément de guidage d'écoulement (17) présente une extrémité côté entrée (17A) et une extrémité côté sortie (17B), l'extrémité côté sortie (17B) étant inclinée dans le sens périphérique par rapport à l'extrémité côté entrée (17A) de telle sorte qu'un tourbillon est supprimé ou qu'un contre-tourbillon est généré lors du passage.

14. Compresseur (20), en particulier compresseur radial ou compresseur diagonal, présentant une roue (21) de compresseur et un carter (5) de compresseur selon l'une des revendications 1 à 13, en particulier dans lequel la roue (21) de compresseur comprend un nombre N₁ d'aubes (23) de roue de compresseur dans la zone d'entrée d'écoulement (15) dans le canal stabilisateur (10) et présentant un nombre N₂ d'éléments de guidage dudit au moins un élément de guidage d'écoulement (17), le nombre N₂ étant ≥ 1,5xN₁.

15. Turbomachine, en particulier turbocompresseur, présentant un compresseur (20) selon la revendication 14.
